# EUROPEAN PATENT APPLICATION

(11) **EP 4 813 961 A1**
(43) Date of publication of application: **30.09.2026**
(21) Application number: 26168363.5
(22) Date of filing: 27.03.2026
(51) Int. Cl.: C04B 41/00, B05D 3/02, B05D 3/04, B28B 11/04, B28B 11/24, B28B 17/00, B29C 35/08, C04B 41/45, C04B 41/63, B28B 15/00

(54) **PROCESS FOR RESIN-COATING NATURAL STONE SLABS AND RELATED PLANT**

(30) Priority: 28.03.2025 IT 202500006666
(71) Applicant: Pedrini SpA ad Unico Socio, 24060 Carobbio degli Angeli (BG) (IT)
(72) Inventor: PEDRINI, Giambattista, I-20460 Carobbio degli Angeli (BG) (IT)
(74) Representative: Metroconsult Srl

(57) **Abstract**

A process for resin-coating stone slabs and the like and a plant for carrying out said process; the process comprises a drying phase of the slab (3) with a de-humidification station of the surface (2) and of the entire slab to be treated; a distribution or spreading phase, manual or mechanized, of a layer of resin on the surface of the slab (3) being treated; a polymerization phase of the layer of resin arranged on the surface (2) of the slab being treated; and presents, between the said spreading phase of the resin on the surface (2) and the polymerization phase, a combined treatment phase (1), i.e., combined with the application of vacuum and the simultaneous application of heating with microwaves.

## Description

### Field of application

The invention concerns a process for resin-coating natural stone slabs and the like, and a plant for the application of said process. In other words, the invention concerns a new way of applying surface resin-coating on natural stone slabs, suitable for making the protection of the resin more effective when applied to the surface of a stone slab. Furthermore, the invention concerns a plant that implements the new method of treating the resin on the surface of the slab.

### Prior art

The state of the art comprises various types of plants and methods for applying resin for the reinforcement and sealing of pores, cavities, crazing or slight fissures in natural stone, ceramic material or artificial stone slabs. Indeed, they provide for the distribution of the resin on the surface of the slab under treatment, so as to completely cover the slab with the resin, making it penetrate into the pores, cavities, crazing or slight fissures, a hardening of the same by means of catalytic action with heat, or also with lower temperature heating with photoinitiators present in the resin and the action of ultraviolet radiation with either gallium lamps or also mercury lamps.

Moreover, the resin, even if made fluid for penetration into said asperities of the surface of the slab under treatment, in the subsequent hardening phase through cross-linking and polymerization tends to maintain a distribution of air microbubbles that can remain trapped in the obtained polymer constituting the thin layer of resin consolidated on the surface of the treated slab.

In the art, it is known to coat in various ways the surface of a natural or artificial stone slab, or also ceramic, with the application of a layer of said resin, with manual or mechanized distribution and a subsequent hardening phase as described in document ES 2273593 A1, mainly aimed at closing the pores after the polishing of the treated material with the resin and a suitable solvent that is removed before polymerization; furthermore, in document ES 2360775 B1, the de-humidification of the slab and the aeration of the chamber where microwaves of various frequencies are applied for the final polymerization is described; therein is also described a prior preparation of de-humidification of the slab to be treated.

The use, therefore, of the means described in the art, i.e., limiting the use of solvent and adopting techniques for its removal and prior de-humidification, has led to the development of surface treatment methods with polymerization with photoinitiators for various families of organic compounds in which said photoinitiators speed up the polymerization when suitably activated even in the presence of solvent in small quantities.

Moreover, in the treatment of large surfaces, such as natural or artificial stone slabs that require reinforcement, treatments with UV radiation or polymerization procedures for reinforcing construction materials show that without short drying times, or depending on the type of construction material product to which it is applied, defects occur in the treated slabs, which lead to breakage and cracks due to expansion and environmental factors; therefore, even with procedures using ultraviolet radiation, a preventive de-humidification is applied as described in document ES 2302451 A1, also oriented towards the structural reinforcement of the treated material.

Furthermore, it is known in the art from document WO 2023/248063 A1 to introduce into the plant for treating manufactured articles such as slabs of natural or artificial stone material or also ceramic, in addition to polymerization with resin photoinitiators, also a step of applying vacuum to the surface of the manufactured article under treatment to promote the penetration of the resin into said pores, cavities, crazing or slight fissures, before the specific polymerization which in this document is declared with ultraviolet radiation with different frequencies in special stations subsequent to the spreading and the application of vacuum.

The patent document WO 2022/034620 A1 illustrates a plant for the resin-coating of natural stone slabs and in particular for the processing of natural marbles and granites, in which a vacuum chamber is present for the removal of small stone fragments.

Therefore, the main limit of the prior art as set forth in the previous solutions described arises from the complexity of the prior treatment on the surface that must be protected by the resin and from the described method of applying the resin itself and of hardening it, with polymerization thereof. Indeed, in the art of using surfaces in natural stone for decorative purposes, the demand is increasingly directed towards using natural, or also artificial, materials that have imperfections and which in turn become strong decorative features; hence arises the need to make the resin-coating process of the slabs faster, more effective and with a certain result even if these imperfections are a source of poor maintenance of the characteristics of the obtained resin layer, thus avoiding making the discontinuities of the slab under treatment, namely the pores, cavities, crazing or slight fissures, as starting points for damage when the said slab is used, but consolidating the particular decorative effect generated by them.

This state of the art is susceptible to further and very advantageous improvements with regard to the possibility of implementing a process for resin-coating natural stone slabs, that is, which applies a new process of resin-coating and surface treatment of the manufactured articles for their consolidation and surface protection, which overcomes the aforementioned drawbacks and simultaneously creates a plant for applying the process such as to make the resin-coating treatment for large quantities of large-surface manufactured articles to be treated functional, rapid and certain, and at the same time allow a direct check of the treated surface to correct any imperfections that remain on the surface under treatment after the resin spreading.

The technical problem, therefore, which is at the basis of the present invention is that of creating a new process for resin-coating and surface treatment of manufactured articles, improving the known art, i.e., allowing better penetration of the resin into the surface of the manufactured article under treatment combined with a homogenization of the resin itself, while allowing for possible corrections before final polymerization.

A purpose inherent in the preceding technical problem is to provide said process which must be able to speed up the surface treatment phases in their entirety, limiting the intervention times in the treatment stations of the implemented resin-coating plant and speeding up the production chain of the treatment on the natural stone slabs.

Furthermore, a further and specific purpose of the aforesaid technical problem in the implementation of the new impregnation and polymerization process of the resin layer applied to the surface of the slab under treatment is the object of the constitution of a specific station that allows to act deeply on the resin layer, purifying it from the air bubbles and moisture present on the surface being treated.

Furthermore, a further aspect of the technical problem faced, in creating the new process for resin-coating and surface treatment of manufactured articles, is connected to the constitution, distribution and arrangement of the treatment stations for the manufactured articles in the industrial plant that applies the resin-coating process.

### Summary of the invention

This problem is solved, according to the present invention, by a process for resin-coating stone slabs and the like; comprising a drying step of the slab with a de-humidification station for the surface and for the entire slab to be treated; a distribution or spreading step, manual or mechanized, of a resin layer on the surface of the slab under treatment; a polymerization step of the resin layer disposed on the surface of the slab under treatment; and is characterised in that it presents between the said step of spreading the resin on the surface and the polymerization step, a combined treatment step, combining the application of vacuum and the simultaneous application of heating with microwaves.

In other words, the combined treatment step is a step in which vacuum and heating are simultaneously applied, wherein heating is applied by means of microwaves.

In a preferred embodiment, subsequent to the combined treatment step with vacuum and microwaves, before the polymerization step, a step of visual inspection and touch-up of the resin layer distributed on the surface of the slab is performed.

Furthermore, in a precise mode of application, the combined treatment step involves the application of vacuum at a pressure of at least 400 mbar.

Furthermore, in a preferred embodiment, the application time of the combined vacuum and microwave treatment is also extended up to four minutes, but can be shorter depending on the vacuum reached and maintained for the application time; for example, the application time of the combined vacuum and microwave treatment can preferably be between 50 seconds and 240 seconds.

According to a preferred embodiment, the application time of the combined vacuum and microwave treatment is between 90 and 180 seconds and, furthermore, the vacuum application pressure is between 80 and 90 mbar.

In a constructive embodiment of the described resin-coating treatment method, a plant for resin-coating stone slabs and the like is provided, comprising a successive arrangement of stations for treating the surface of the slab in which the slab is housed on a respective planar support that allows its movement on upper lateral conveyors from the first de-humidification station, towards a second station for spreading with the resin layer on the surface of the slab, and furthermore, towards and inside a combined treatment station comprising a closed chamber of combined treatment with vacuum and microwaves, then towards a final polymerization station before the exit; and which presents the means for moving the slab under treatment made with upper lateral conveyors throughout the path of the plant provided for the treatment and also inside the closed chamber of combined treatment with vacuum and microwaves even with the combined treatment action active.

According to an embodiment, the overall arrangement of the plant for resin-coating stone slabs and the like comprises a return motion, towards an exit station from the plant for the treated slabs on their respective planar supports, positioned at a lower level on lower lateral conveyors, with the slabs in the return path protected by containment barriers from possible resin drippings.

According to an embodiment, the closed chamber of the combined treatment station of the plant for resin-coating stone slabs and the like is equipped with openable hatches for the passage of a slab under treatment and at least one vacuum pump and at least one microwave emitter with a waveguide that penetrates into the closed chamber and faces the surface under treatment of the slab; internal and external means for the movement of the slab are associated with the closed chamber.

According to a preferred variant of the preceding embodiment, more emitters with respective waveguides are placed to cover the entire surface of the slab under treatment; the waveguides are spaced from each other according to their microwave irradiation capacity.

According to an embodiment of the plant for resin-coating stone slabs and the like, the internal means for moving the slab consist of upper lateral conveyors for the slabs which are in turn laid, each, on planar supports with fixed and larger dimensions than the single slab; these conveyors are operated with a reciprocating forward/backward motion, moving the slab in the closed chamber, so as to ensure the correct heating of the ends of the surface of the slab simultaneously with the application of vacuum.

According to a preferred embodiment of the plant for resin-coating stone slabs and the like, each emitter is connected to the waveguide with the interposition of a filter that allows the passage of microwaves and prevents the propagation of the vacuum from the waveguide towards a waveguide duct and the emitter itself, i.e., it prevents air re-entry through the emitter.

According to a further preferred embodiment of the plant for resin-coating stone slabs and the like, each emitter has a bulb chamber insulated with a seal that prevents the decrease of the vacuum through the chamber of the emitter itself and prevents air re-entry through the waveguide into the closed chamber.

According to an aspect of the preceding further preferred embodiment, the seal is associated with a shielding that prevents the propagation of the microwaves emitted from the bulb towards the environment external to the emitter.

Further characteristics and advantages of the present invention, in the implementation of a process for resin-coating natural stone slabs, a plant for the application of the treatment process and a specific station for its application, will result from the following description of a constructive and implementation form, given by way of indicative and non-limiting example with reference to the six attached drawing sheets.

### Brief description of the drawings

- Figure 1 represents a schematic perspective view of a plant for consolidating the resin-coating applied to the upper surface of a stone slab or similar material: the closed chamber under vacuum and with the application of microwaves is presented with open hatches in the transfer phase of a treated slab exiting and a slab to be treated entering; the means for moving the slabs placed on respective planar supports are visible;

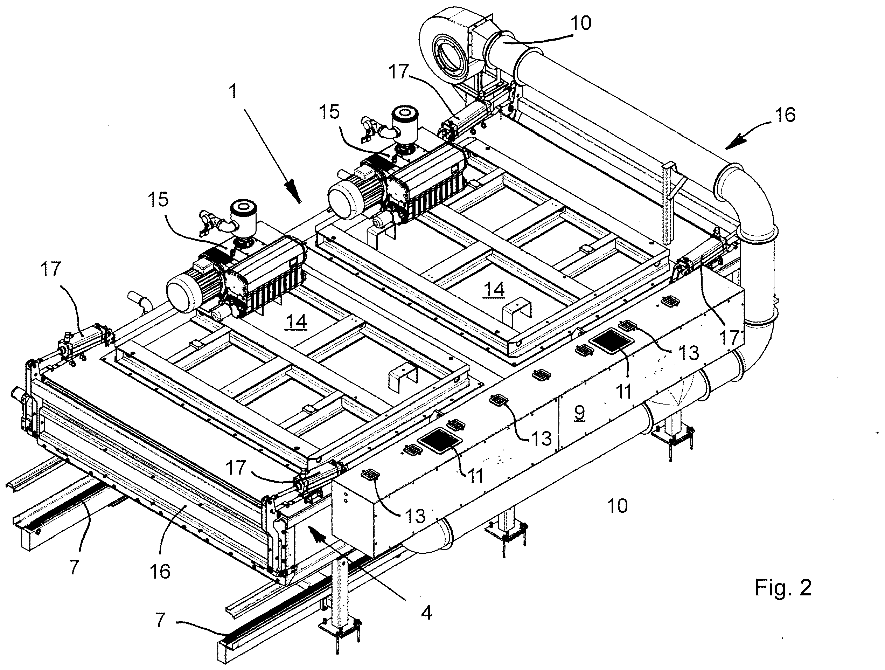

- Figure 2 represents a schematic perspective view of the combined treatment station under vacuum and microwaves completely closed;
- Figure 3 represents a schematic perspective view of the closed chamber under vacuum and microwaves, open at the top to show the slab under treatment and the internal movement means in the closed chamber and the waveguides for the microwaves generated by the emitters, magnetrons, present on the side in view of the simultaneous treatment station itself;
- Figure 4 represents a schematic longitudinal section of a microwave emitter and of the first section of waveguide towards the inside of the closed chamber where the vacuum is applied;

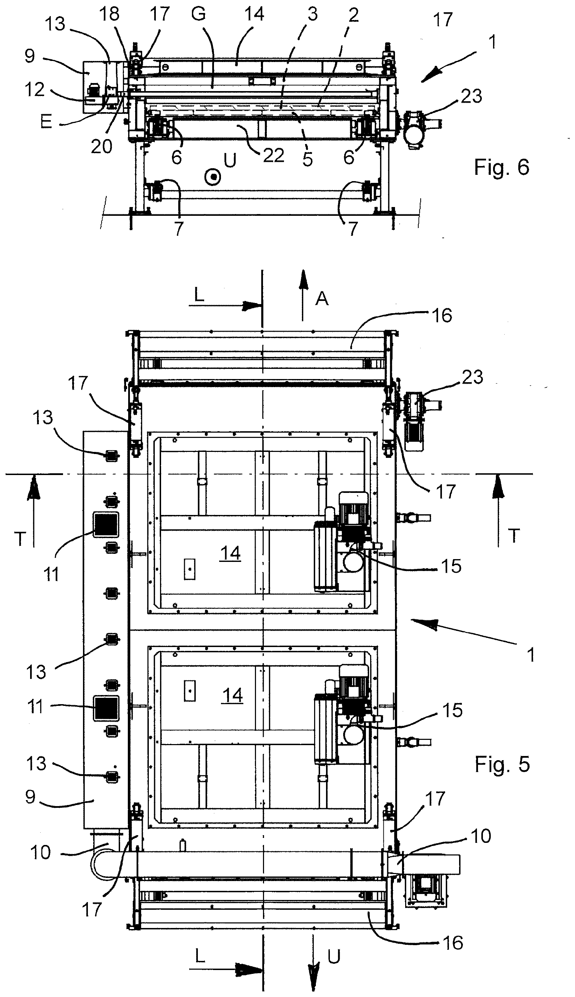

- Figure 5 represents a schematic plan view of the combined treatment station of Figure 2 with the hatches open;
- Figure 6 represents the schematic cross-section T-T of the combined treatment station of the preceding Figure 5;

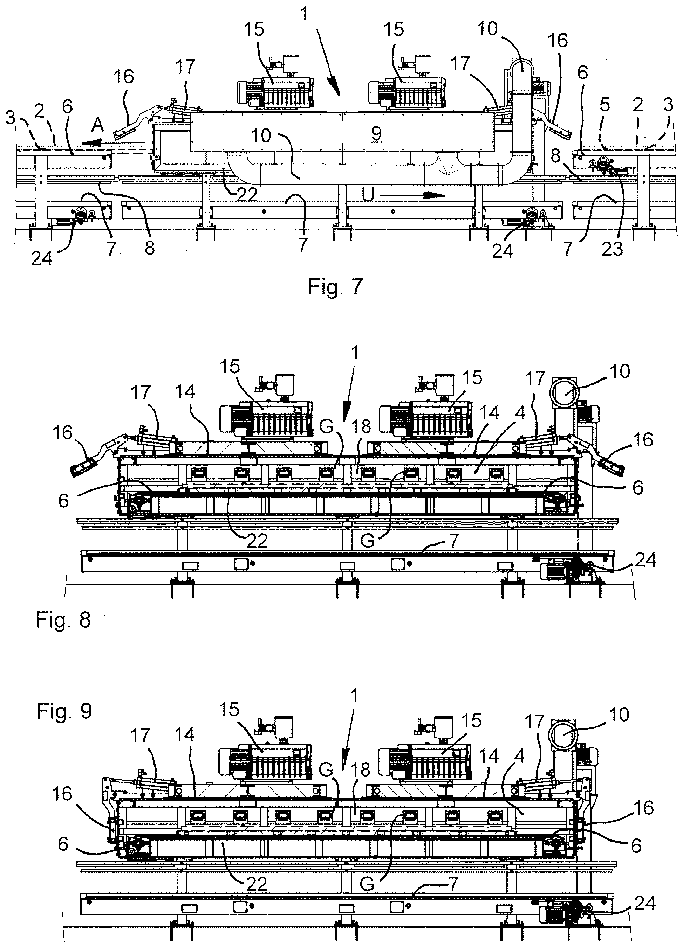

- Figure 7 represents a schematic side view of the combined treatment station and of a part of the plant of Figure 1;
- Figures 8 and 9 represent a schematic longitudinal section, L-L of Figure 5; the two figures differ in the presence of the open hatches, Figure 8, and closed hatches, Figure 9;
- Figure 10 represents a schematic side view of the microwave emitter used in connection with a waveguide as shown in Figures 3 and 4;
- Figure 11 represents a schematic section XI-XI of Figure 10 taken at the base of the emitter to show a seal at the base of the emitter bulb, for separation between the external environment and the confinement of the vacuum inside the emitter chamber with the bulb;
- Figure 12 represents a schematic section XII-XII of Figure 10 to show a cage for containing the microwaves and their direction towards the waveguide;
- Figure 13 represents a schematic plan view of the first section of the waveguide as it passes through the wall of the closed chamber of the combined treatment station with the arrangement of a microwave-transparent filter;
- Figure 14 represents a schematic section on trace XIV-XIV of Figure 13, furthermore, the section comprising the physical filter for the passage of microwaves and the maintenance of the vacuum in the waveguide is shown enlarged.

### Detailed description of a preferred embodiment

In the Figures, a constructive form of a combined treatment station 1, for the surface 2 of the slab 3 under treatment, with the application of microwave irradiation and vacuum application within the closed chamber 4, during the treatment within the said station, is schematically represented. The slab 3 under treatment is placed on a planar support 5, not affected by the microwaves, which allows the slab 3 to be moved on upper lateral chain conveyors 6 that transport the planar support 5 with the slab 3 in the plant in order to carry out the resin-coating process described herein. The plant comprises, in addition to the combined treatment station 1 and not shown elsewhere, as they are known in the art: upstream, a de-humidification station with pre-heating of the slab; a manual or mechanized resin-coating station on the surface 2 of the slab 3 under treatment; then, downstream of the combined treatment station 1: a visual inspection and correction station for the spreading imperfections and, finally, a polymerization station for the resin layer distributed on the surface 2 of the thus treated slab 3.

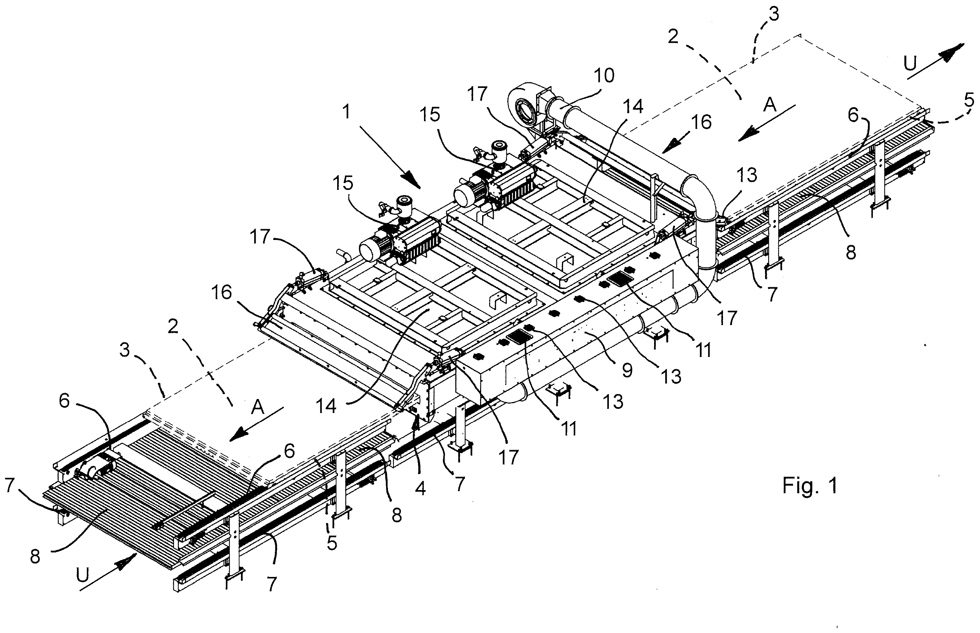

Moreover, the spatial position of these unillustrated stations is collateral to what is shown in Figure 1. The forward motion A shows the path of the slabs 3 under treatment upstream and downstream of the combined treatment station 1, while the return motion U, of the slabs exiting the polymerization station, occurs in the opposite direction but at a lower level on lower lateral conveyors 7 that move the planar supports 5 and the slabs 3, with the surface 2 of the polymerized slabs, towards the exit station from the plant, also not shown. An advantageous arrangement of the plant described herein is the return path U created at a level lower than the forward path A. The return motion U occurs, similarly to the forward motion A, on said lower lateral conveyors 7 and, for the protection of the surface 2 of the slabs 3, already polymerized, containment barriers 8 are provided, interposed between the planes of the two chain conveyors, to contain possible dripping of resin from the slabs in forward motion A above, with the resin not yet polymerized.

In the combined treatment station 1, on one side of the closed chamber 4, there are the microwave emitters E, or magnetrons, enclosed in a chamber 9 supplied with external air from the dust removal blower 10, through air outlets 11 from said chamber of the emitters; furthermore, the emitters are equipped with their own air cooling with fans 12 and outlet nozzles 13 to the outside of the chamber 9; the upper plane of the closed chamber 4 is made with ribbed covers 14 to withstand the vacuum created by vacuum pumps 15; furthermore, this closed chamber 4 is closed, in the combined vacuum plus microwave treatment phase, with hatches 16 operated in movement by actuators 17.

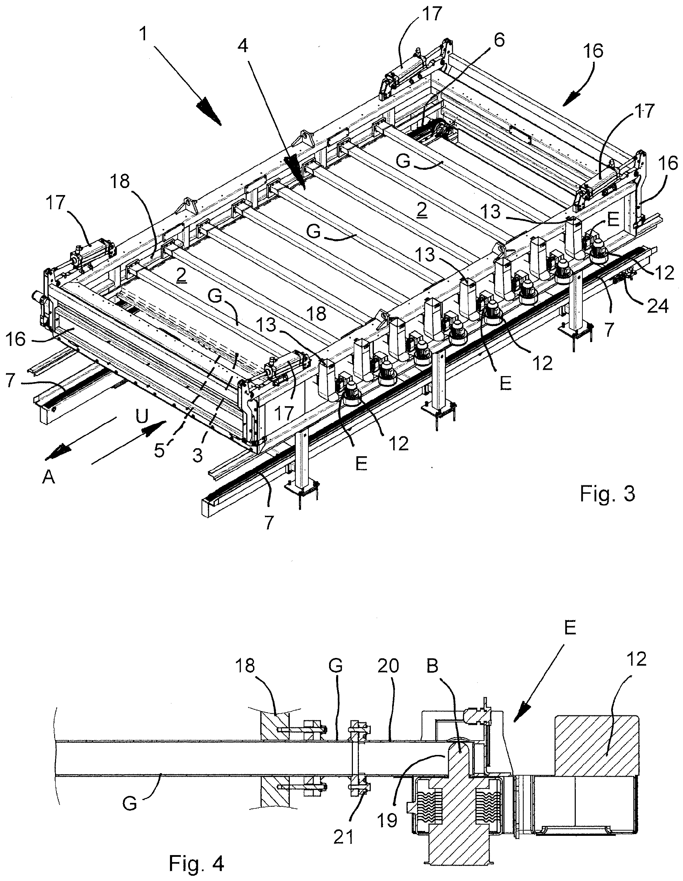

In the Figures, furthermore, the emitters E connected with waveguides G are visible, which penetrate through a wall 18 into the closed chamber 4 in a sufficient number to cover the entire surface of the slab 3; in the figures, eight waveguides G are shown; each emitter has a bulb B enclosed in a chamber 19 open towards a microwave duct 20 which is connected by a flange 21 of the duct to the respective waveguide G, as visible in Figure 4. The closed chamber 4 has a ribbed lower plane 22 and, laterally to the closed chamber but externally, a gearmotor 23 for driving the linear conveyors 6 inside the closed chamber or upper linear conveyors, when they are external to the combined treatment station 1, and a gearmotor 24 for driving the lower lateral conveyors 7 that complete the return of the treated slabs and advantageously reduce the overall footprint of the treatment plant.

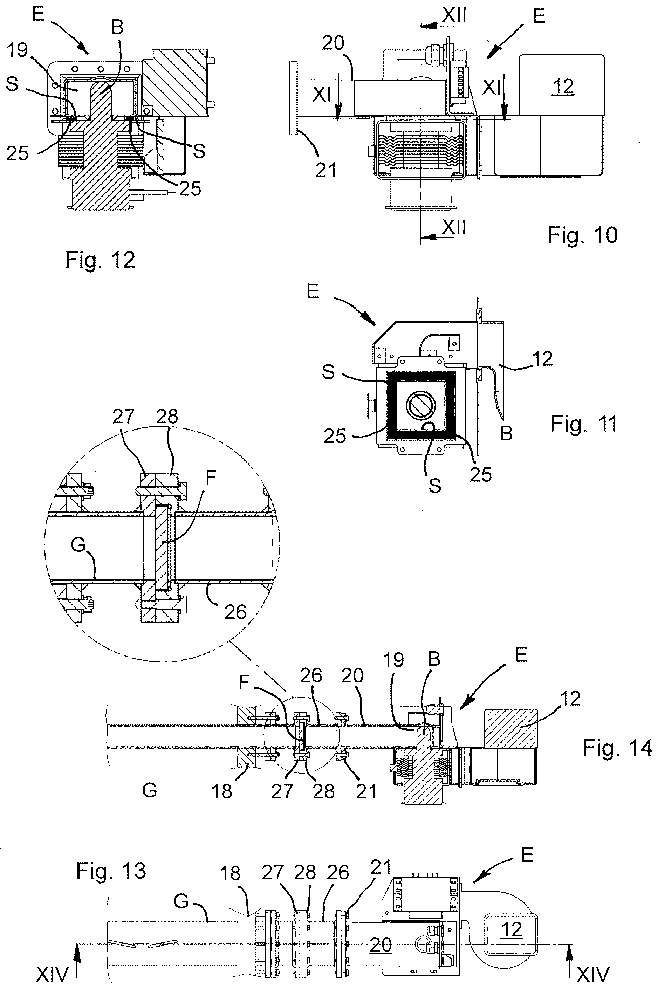

In the experimentation with the arrangement of the emitter E of Figure 4, it was not possible to reach the desired vacuum level in the combined application of vacuum and microwaves due to air re-entries through the internal structural joints of the emitter E, or magnetron, and different connections between the emitter and the waveguide G have been made and verified, as shown in Figures 10-12, creating a vacuum insulation of the chamber 19 of the emitter with a seal 25 that insulates the chamber 19 of the emitter, thus avoiding air re-entries even if in the chamber 19 the vacuum is present that propagates from the waveguide G and, through the duct 20 or launcher, arrives in said chamber; furthermore, a more secure confinement of the microwaves is achieved with a shielding S applied with the same seal 25, which allows maintaining the electrical insulation of the microwave confinement in the chamber 19 and in the duct 20. Furthermore, in Figures 13-14, a solution with a filter F with a vacuum seal towards the waveguide G is shown, which however allows the passage of microwaves through said filter. Thus, the desired vacuum levels have been achieved with both these solutions. Furthermore, the solution with filter F provides, eventually, the connection between the duct 20 and the waveguide G with an intermediate duct section 26 equipped with a housing flange 28 for said filter F and in coupling with a guide flange 27 which, in the other embodiments, is coupled to the flange 21 of the duct 20 or launcher.

The process for resin-coating natural stone slabs, such as marble, granite, quartzite and the like, which can have maximum dimensions of 3600x2200 mm and a maximum thickness of 40 mm, presents the following operations. The slab under treatment is dried in a de-humidification station until it reaches a surface temperature of 40-45° C; subsequently, the slab is coated with resin in the manual or mechanized spreading station, resin which is advantageously of a known epoxy type, providing to cover the defects that the slab itself presents; then the slab 3 with the resin spread on its surface 2 is introduced into the combined treatment station 1, closing the hatches 16 and applying the vacuum with the vacuum pumps 15 and the action of the microwaves emitted by the emitters E and distributed by the waveguides G inside the closed chamber 4. The described operation generates a combined action of vacuum plus microwaves which has the purpose of removing further moisture, removing the bubbles trapped in the resin, heating the resin to start the polymerization/hardening process, making the resin more fluid in this phase, thus facilitating the expulsion of air or moisture microbubbles from the surface 2 or from the resin itself, as well as making the resin enter the defects of the slab, extracting with the vacuum the air present in the defects that are intended to be stabilized by covering with the resin layer deposited on the surface 2 of the slab 3. After the cycle time deemed appropriate depending on the epoxy resin used and the actual surface of the slab as well as the conditions of the stone material, the vacuum action is stopped, the hatches are opened, providing for the advancement of the slab in the plant and the entry of a subsequent slab into the combined treatment station 1 for treatment.

The slab exiting the combined treatment station 1 is touched up with visual inspection and, if necessary, corrected for imperfections in spreading or filling of cavities and crazing, and, finally, introduced into a polymerization station for the distributed resin layer. In this visual inspection station, the resin on the upper surface of the slab, which exits the combined treatment, is in a condition of viscosity suitable for being touched up before the final hardening. Then, in the final polymerization station, the definitive consolidation of the resin layer on the surface 2 of the treated slab 3 as described takes place.

Each station upstream and downstream of the combined treatment station 1 is designed to operate within the cycle times of the plant implementing the new process of resin-coating natural stone slabs, which are dictated by the operation of the combined treatment station 1 as described.

In fact, the operation time of the combined treatment station 1 occurs between 90 and 180 seconds, a time in which the upstream stations must carry out the respective operations of de-humidification of the slab 3, which will be treated, and spread the resin over the entire surface 2 of the slab under treatment. Furthermore, the same time limits apply to the visual inspection and touch-up, downstream of the combined treatment station 1, and to the subsequent final polymerization station of the resin layer. The indicated operation time has been found sufficient to obtain a vacuum, albeit imperfect, with the emitters E connected directly to the waveguides G in the constructive form of Figure 4, of the order of 300 mbar, which presented vacuum leaks and therefore the need to keep the vacuum pumps 15 active for the entire operation time; whereas with the constructive solutions of Figures 10-12 or also Figures 13-14, it has been abundant, allowing to reach also 80-90 mbar, of pressure level in the closed chamber 4 in the application of the treatment, in about 100 seconds, thus allowing the widest modulation in the application of the combined vacuum treatment, regulating the time without keeping the vacuum pumps active, and with the microwaves, regulating the power applied to the emitters according to the desired result; the emitters E are equipped with a maximum power of 2 kW each, i.e., with a total effective power of 16 kW in the closed chamber 4.

In the combined treatment phase in the closed chamber 4, the single slab 3 under treatment remains suspended with the planar support 5 on the upper lateral conveyors 6, present in the closed chamber and controlled by the upper gearmotor 23 external to it, with this, a further distribution of the microwave action, coming from the waveguides G, occurs by the movement in the forward/backward direction on said upper lateral conveyors 6 with the closed chamber 4 still subjected to the vacuum action. Thus, the ends of the slab 3 are also correctly facing at least the respective waveguide G at the ends of the closed chamber 4, to achieve a complete treatment of these ends.

As stated above, the effect sought in the solution to the technical problem of this invention is expressed by the combined action of the vacuum application, which provides for sucking out the air and moisture remaining on the surface 2 of the slab 3 or in the resin itself, and with the application of the heating action of the resin layer applied to the surface of the slab, without for this reason reaching the complete polymerization of the resin itself. This intermediate operation, between the spreading of the resin layer on the surface 2 of the slab 3 under treatment, allows to effectively apply the suction of air from the defects of the surface of the slab, mainly composed of pores, cavities, crazing or slight fissures, and to avoid the formation of microbubbles, indeed helping them to exit the resin layer solicited by the vacuum, since with the treatment in the combined treatment station 1, this layer still remains very fluid.

Finally, in completing the response to the technical problem set out above, also the adoption of the return path of the slabs 3 with the already treated surface 2, which occurs on the lower lateral conveyors 7, allows to limit the linear footprint of the treatment line with polymerization of the resin layer placed on the surface 2 of natural stone slabs, creating an efficient and pre-ordered cadence production line with this treatment and of reduced footprint.

The advantages in the use of a process for resin-coating natural stone slabs, a plant for the application of the treatment process and a specific station for its application as described, can be summarized as follows.

The new process of resin-coating the surface 2 of a slab 3 in natural stone allows for a more effective formation of the resin layer and for removing air and moisture from the surface under treatment and from the resin itself as the combined action of the vacuum and heating with microwaves makes the resin penetrate the fissures because the vacuum extracts the bubbles and the microwave heating lowers the viscosity of the resin homogeneously throughout the volume of the film constituting the spread resin layer; in fact, in the subsequent visual inspection station, given the state of partial polymerization, it is possible to intervene and touch up the resin after the combined microwave/vacuum treatment carried out in the closed chamber 4.

Obviously, to a process for resin-coating natural stone slabs, a plant for the application of the treatment process and a specific station for its application, as described above, a person skilled in the art, in order to satisfy specific and contingent needs, may make numerous modifications, all however contained within the scope of protection of the present invention as defined by the following claims.

In fact, although less conveniently, in the application of the treatment process to the combined treatment station 1 and to the combined action between the application of vacuum and the slight heating of the resin layer on the surface of the slab, complete polymerization may follow without the eventual touch-up and visual inspection provided. Another variant in the plant that implements the process of treatment and consolidation of the resin layer may present a different arrangement of the upstream or downstream stations and also the transport and exit from the plant of the treated slabs 3 may be carried out in a linear manner without the described return of the slab with the polymerized layer at a lower level than the preceding stations in the plant. Furthermore, although less conveniently, the described process can be applied with a vacuum lower than 400 mbar which however allows to extract a large part of the moisture and air from the surface 2 of the slab under treatment, obviously prolonging the application times. Finally, to the detriment of the functionality and productivity of the described resin-coating treatment plant, a polymerization step can be carried out directly in the combined treatment station by extending the residence times of the slab inside it, also by temporally limiting the application of the vacuum.

## Claims

1. Process for resin-coating stone slabs and the like, comprising a drying phase of the slab (3) with a de-humidification station of the surface (2) and of the entire slab to be treated; a distribution or spreading phase, manual or mechanized, of a resin layer on the surface of the slab (3) being treated; a polymerization phase of the resin layer arranged on the surface (2) of the slab being treated; **characterised in that** it presents, between the said spreading phase of the resin on the surface (2) and the polymerization phase, a combined treatment phase (1), combining the application of vacuum and the simultaneous application of heating with microwaves.

2. Process for resin-coating stone slabs and the like, according to claim 1, wherein subsequent to the combined treatment phase with vacuum and microwaves, before the polymerization phase, a visual control and retouching phase of the resin layer distributed on the surface (2) of the slab (3) is carried out.

3. Process for resin-coating stone slabs and the like, according to claim 1 or 2, wherein the combined treatment phase involves the application of vacuum at a pressure lower than 400 mbar.

4. Process for resin-coating stone slabs and the like, according to one of the preceding claims 1, 2 or 3, wherein the application time of the combined vacuum and microwave treatment is between 50 and 240 seconds.

5. Process for resin-coating stone slabs and the like, according to one of the preceding claims 3 or 4, wherein the application time of the combined vacuum and microwave treatment is between 90 and 180 seconds and, furthermore, the application pressure of the vacuum is between 80 and 90 mbar.

6. Plant for resin-coating stone slabs and the like, in implementation of the resin-coating process according to one of claims 1-5, comprising a successive arrangement of stations for treating the surface (2) of the slab (3) in which the slab is housed on a respective planar support (5) that allows its movement on upper lateral conveyors (6) from the first de-humidification station, towards a second station for spreading with the resin layer on the surface (2) of the slab, and furthermore, towards and inside a combined treatment station (1) comprising a closed chamber (4) for combined treatment with vacuum and microwaves, then towards a final polymerization station before the exit; **characterised in that** it presents the means for moving the slab (3) under treatment made with upper lateral conveyors (6) throughout the path of the plant provided for the treatment, even inside the closed chamber (4) of combined treatment with vacuum and microwaves also with the combined treatment action active.

7. Plant for resin-coating stone slabs and the like, according to the preceding claim 6, wherein the overall arrangement of the plant comprises a return motion (U), towards an exit station from the plant for the treated slabs (3) on their respective planar supports (5), positioned at a lower level on lower lateral conveyors (7), with the slabs in the return path protected by containment barriers (8) from possible resin drippings.

8. Plant for resin-coating stone slabs and the like, according to any one of claims 6 or 7, wherein the closed chamber (4) is equipped with openable hatches (16) for the passage of a slab under treatment and at least one vacuum pump (15) and at least one microwave emitter (E) with a waveguide (G) that penetrates into the closed chamber and faces the surface (2) under treatment of the slab (3); internal and external means for moving the slab are associated with the closed chamber (4).

9. Plant for resin-coating stone slabs and the like, according to claim 8, wherein more emitters (E) with respective waveguides (G) are placed to cover the entire surface (2) of the slab (3) under treatment; the waveguides are spaced from each other according to their microwave irradiation capacity.

10. Plant for resin-coating stone slabs and the like, according to one of claims 8 or 9, wherein the internal means for moving the slab (3) consist of upper lateral conveyors (6) for the slabs which are in turn laid, each, on planar supports (5) with fixed and larger dimensions than the single slab; these conveyors are operated with a reciprocating forward/backward motion, moving the slab in the closed chamber (4), so as to ensure the correct heating of the ends of the surface (2) of the slab simultaneously with the application of the vacuum.

11. Plant for resin-coating stone slabs and the like, according to any one of the preceding claims from 8 to 10, wherein each emitter (E) is connected to the waveguide (G) with the interposition of a filter (F) that allows the passage of the microwaves and prevents the propagation of the vacuum from the waveguide towards a waveguide duct (20) and the emitter itself, i.e., it prevents air re-entry through the emitter.

12. Plant for resin-coating stone slabs and the like, according to any one of the preceding claims from 8 to 10, wherein each emitter (E) has a chamber (19) of the bulb (B) insulated with a seal (25) that prevents the decrease of the vacuum through the chamber (19) of the emitter itself and prevents air re-entry through the waveguide (G) into the closed chamber (4).

13. Plant for resin-coating stone slabs and the like, according to claim 12, wherein the seal (25) is associated with a shielding (S) that prevents the propagation of the microwaves emitted from the bulb (B) towards the environment external to the emitter (E).
